**Europäisches Patentamt**

(19) **European Patent Office**

**Office européen des brevets**

(11) Numéro de publication: **0 060 755**
A1

# (12) DEMANDE DE BREVET EUROPEEN

(21) Numéro de dépôt: **82400369.3**

(51) Int. Cl.³: **G 21 C 19/06,** G 21 C 19/10

(22) Date de dépôt: **03.03.82**

(30) Priorité: **11.03.81 FR 8104888**

(71) Demandeur: **SOCIETE GENERALE POUR LES TECHNIQUES NOUVELLES S.G.N., 1 rue des Hérons, Montigny Le Bretonneux F-78184 St. Quentin Yvelines Cedex (FR)**

(43) Date de publication de la demande: **22.09.82 Bulletin 82/38**

(72) Inventeur: **Guilloteau, René, 9 rue du Dr. Roux, F-91390 Verrières-le-Buisson (FR)**

(84) Etats contractants désignés: **BE CH DE GB IT LI SE**

(74) Mandataire: **Combe, André et al, CABINET BEAU DE LOMENIE 55 rue d'Amsterdam, F-75008 Paris (FR)**

(54) Procédé et dispositifs de préhension de paniers à éléments irradiés et paniers utilisables pour ledit procédé.

(57) La présente invention concerne un panier utilisé pour la manipulation et/ou le stockage d'éléments irradiés, caractérisé en ce qu'il est pourvu, au centre de sa face supérieure ouverte d'un élément de préhension (1) en forme de cheminée, solidaire dudit panier et présentant, sur son pourtour, une rainure à section circulaire (2) agencée de façon à permettre la préhension au moyen d'une pince munie de doigts (3) (4) qui coopèrent avec ladite rainure, et le procédé de manipulation utilisant ledit panier.

EP 0 060 755 A1

Procédé et dispositifs de préhension de paniers à éléments irradiés
et paniers utilisables pour ledit procédé.

La présente invention concerne un procédé pour la
préhension mécanique de paniers contenant des éléments de nature
radioactive ; elle concerne également les paniers comportant un dispositif de préhension permettant de mettre en oeuvre ledit procédé.

Il est connu que les éléments irradiés sont, aux
fins de transport et/ou de stockage, déposés dans des conteneurs
appelés paniers. Ces paniers sont très généralement constitués par
des cylindres parallèles fermés à une extrémité et régulièrement
disposés pour former un ensemble unique. Ces cylindres ont par
exemple, dans le cas d'éléments combustibles de piles à eau légère,
une section carrée ou rectangulaire, une même paroi métallique
formant paroi pour deux cylindres mitoyens.

Ces paniers doivent évidemment subir diverses
manipulations et des dispositifs ont été proposés pour leur préhension et leur manipulation. Mais les dispositifs actuellement utilisés
présentent des difficultés de réalisation ou d'emploi.

La présente invention vise un procédé permettant
de surmonter les difficultés actuellement rencontrées dans l'utilisation de dispositifs connus pour la préhension et la manipulation
des paniers.

Le procédé selon l'invention est caractérisé
en ce que
- chaque panier est pourvu au centre de sa face ouverte d'un élément
  de préhension en forme de cheminée solidaire dudit panier, et présentant sur son pourtour une rainure à section circulaire agencée
  de façon à permettre la préhension,
- et la préhension de chaque panier est réalisée à l'aide d'une pince
  dont les doigts sont agencés pour pouvoir s'insérer dans ladite
  rainure dudit élément de préhension.

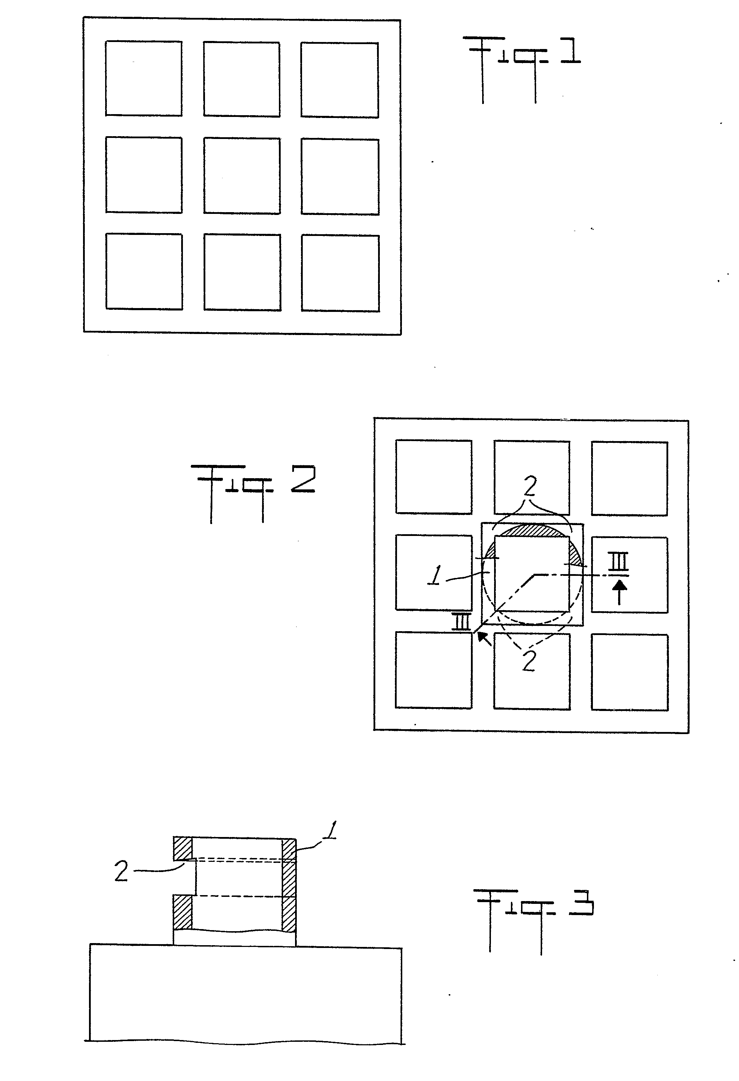

Pour mieux comprendre l'invention, celle-ci va être
illustrée de façon non limitative par un mode de réalisation adapté
à un panier formé de cylindres à section carrée, juxtaposés, l'ensemble formant également un carré comportant un nombre impair de
cylindres. Un panier de ce type comportant 9 cylindres est représenté,
vu de dessus, sur la figure 1.

Sur la figure 2, on a représenté schématiquement, vu
de dessus, ce même panier comportant l'élément de préhension en forme
de cheminée selon l'invention ; la figure 3 est une vue en coupe III-III de la partie centrale haute du panier de la figure 2.

La figure 3 représente en coupe une pince assurant la préhension de l'élément de préhension solidaire du panier.

Le panier vu de dessus sur la figure 1 est constitué de neuf cylindres de section carrée, disposés côte à côte.

Pour donner un ordre de grandeur, chaque cylindre a une section droite carrée de 240 mm de côté, les cylindres sont séparés par des parois de 70 mm d'épaisseur.

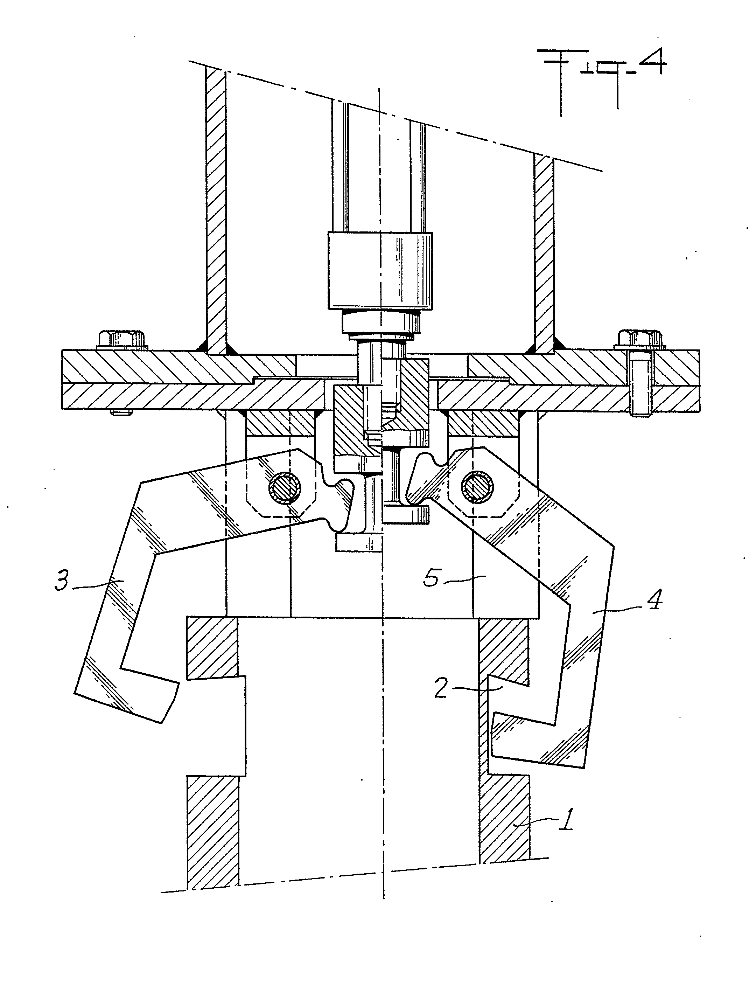

Sur les figures 2 et 3, on distingue

- l'élément de préhension 1,
- cet élément est en forme de cheminée cylindrique ; l'encombrement de la cheminée est tel que cette cheminée n'obture en aucune façon (même partiellement) ni les ouvertures des cylindres du panier voisins du cylindre central, ni l'ouverture du cylindre central ; c'est d re d'une part que l'intérieur de la cheminée a sensiblement une section carrée de même dimension que la section droite de chaque cylindre (cylindre central) et d'autre part que l'épaisseur de la cheminée est au plus égale à la distance séparant le cylindre central des cylindres voisins ; par ailleurs la cheminée doit avoir des dimensions (épaisseur) suffisantes pour qu'elle résiste aux efforts qui seront exercés sur elle lors de la préhension et de la manipulation du panier qui se feront selon l'invention, par l'intermédiaire de cette cheminée ; dans le cas particulier des figures 2 et 3, l'épaisseur de la cheminée est égale à la moitié de l'épaisseur des parois séparant le cylindre central des cylindres immédiatement voisins ; enfin ladite cheminée est solidaire du panier c'est-à-dire qu'elle est fixée de façon très solide et de préférence définitive à ce panier, le moyen de fixation le plus convenable paraît être la soudure directe de la cheminée sur le panier ;
- en 2, l'élément 1 comporte une rainure à section circulaire ; c'est dire que la profondeur de cette rainure est différente si on la considère selon un plan passant par le milieu de deux côtés opposés de la cheminée ou si on la considère selon un plan passant par la diagonale de la cheminée ; dans l'exemple représenté sur les figures 1 et 2 la profondeur de la rainure est nulle si on la considère dans un plan radial passant par le milieu d'un côté de la cheminée ; la rainure peut avoir une forme droite (bords perpendiculaires à l'axe de la cheminée) ou peut présenter une certaine dépouille de façon à faciliter la préhension par l'intermédiaire de la pince.

La pince de préhension est représentée en coupe sur la figure 4.

Sur cette figure, on a représenté
- en 1, la cheminée solidaire du panier au centre de celui-ci ; .
- en 2, la rainure de cette cheminée ; la face supérieure de cette rainure est légèrement conique de façon à faciliter la préhension ;
- en 3, un doigt de la pince représenté à l'état ouvert et en 4 un autre doigt de la pince représenté à l'état fermé ; ces doigts ont des formes appropriées pour pouvoir s'engager dans la rainure 2 et éventuellement s'appuyer de façon convenable sur la face supérieure de ladite rainure ; la commande de la fermeture de la pince sera réalisée automatiquement lorsque ladite prince sera en position convenable grâce, par exemple, à une butée 5 solidaire de la pince qui viendra en appui contre la face supérieure de la cheminée ; la pince peut avoir un nombre quelconque de doigts, il est cependant préférable pour assurer une prise bien répartie que ce nombre soit relativement grand, 6 ou 8 par exemple.

La mise en oeuvre des dispositifs décrits ci-dessus est tout à fait banale pour l'homme de l'art ; elle ne sera donc pas décrite ici.

L'invention a été illustrée en ce qui concerne la cheminée en partant d'un panier qui comporte 9 cylindres (répartis en 3 x 3) et qui présente donc un cylindre central sur lequel la cheminée a été fixée. La même disposition (fixation d'une cheminée sur le cylindre central) est utilisable toutes les fois que le panier comportera un cylindre central. Lorsque le panier ne comportera pas de cylindre central (cas des paniers présentant un nombre pair de cylindres), on pourra utiliser le même dispositif mais la cheminée sera disposée autour des quatre cylindres centraux.

Le procédé et le dispositf selon l'invention présentent par rapport à l'art antérieur des avantages notables, en particulier une plus grande facilité de réalisation et d'utilisation puisque le positionnement de l'élément de préhension (pince) par rapport au panier est simplifié.

## REVENDICATIONS

1.      Panier utilisé pour la manipulation et/ ou le stockage d'éléments irradiés, caractérisé en ce qu'il est pourvu, au centre de sa face supérieure ouverte d'un élément de préhension (1) en forme de cheminée, solidaire dudit panier et présentant, sur son pourtour, une rainure à section circulaire (2) agencée de façon à permettre la préhension au moyen d'une pince munie de doigts (3) (4) qui coopèrent avec ladite rainure.

2.      Panier selon la revendication 1 se présentant sous forme de cylindres juxtaposés à section carrée, l'ensemble ayant également une section carrée et comportant sur chaque côté un nombre impaire de cylindres, caractérisé en ce que l'élément de préhension est constitué par une cheminée de section générale carrée surmontant le cylindre central dudit panier.

3.      Panier selon la revendication 1 se présentant sous forme de cylindres juxtaposés et ne comportant pas de cylindre central, caractérisé en ce que l'élément de préhension est formé d'un cylindre central disposé au-dessus des quatre cylindres centraux dudit panier.

4.      Procédé de manipulation de paniers utilisés pour la manipulation et/ou le stockage d'éléments irradiés caractérisé en ce que :

        - on utilise des paniers munis d'un élément de préhension tel que décrit dans les revendications 1 à 3,

        - ladite préhension de chaque panier est réalisée à l'aide d'une pince dont les doigts sont agencés pour pouvoir s'insérer dans la rainure ménagée dans l'élément de préhension.

1/2

0060755

Fig. 1

Fig. 2

Fig. 3

Fig.4

# 0060755

Office européen
des brevets

**RAPPORT DE RECHERCHE EUROPEENNE**

Numéro de la demande

EP 82 40 0369

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR - A - 2 135 036 (C.E.A.)  <br> * page 3, lignes 1-21; figure 1* | 1,2,4 | G 21 C 19/06 <br> 19/10 |
| A | GB - A - 2 018 220 (NORTHERN ENG.) <br> * page 1, lignes 59-64, 74-85; figure 1 * | 1,2,4 | |
| A | FR - A - 2 211 720 (ASEA ATOM) <br> * page 3, lignes 1-7; figure 1 * | 1,2 | |
| A | US - A - 4 042 828 (RUBINSTEIN et al.) <br> * colonne 4, lignes 12-33; figures 1 et 2 * | 1,2 | G 21 F 5/00 <br> G 21 C 19/10 <br> 19/40 <br> 19/06 <br> B 66 C 1/66 |
| A | FR - A - 2 396 390 (A.C.B.) <br> * page 5, lignes 15-32; figures 1,9 * | 1 | |
| A | FR - A - 2 426 966 (WACHTER W.J. et al.) <br> * page 5, lignes 23-40; figure 1* | 1,2 | |

**DOMAINES TECHNIQUES RECHERCHES (Int. Cl. ³)**

G 21 F 5/00
G 21 C 19/10
        19/40
        19/06
B 66 C 1/66

Le présent rapport de recherche a été établi pour toutes les revendications

| Lieu de la recherche | Date d'achèvement de la recherche | Examinateur |
|---|---|---|
| La Haye | 11-06-1982 | GIANNI |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82